# EUROPEAN PATENT APPLICATION

(11) **EP 4 481 016 A1**
(43) Date of publication of application: **25.12.2024**
(21) Application number: 23212611.0
(22) Date of filing: 28.11.2023
(51) Int. Cl.: C10G 2/00, C10G 45/58, C10G 47/00, C10G 65/14

(54) **SYNTHETIC FUEL AND PRODUCTION METHOD THEREOF**

(30) Priority: 23.06.2023 KR 20230081292
(71) Applicant: SK Innovation Co., Ltd., Seoul 03188 (KR); SK Energy Co., Ltd., Seoul 03188 (KR)
(72) Inventor: LEE, Hye Soo, 34124 Yusung-Gu, Daejeon (KR); LEE, Seung Woo, 34124 Yusung-Gu, Daejeon (KR); LEE, Chang Q, 34124 Yusung-Gu, Daejeon (KR); KIM, Yun Hwa, 34124 Yusung-Gu, Daejeon (KR); PARK, Ki Heum, 34124 Yusung-Gu, Daejeon (KR); JANG, Dong Seok, 34124 Yusung-Gu, Daejeon (KR); CHO, Seung Hyun, 34124 Yusung-Gu, Daejeon (KR); MOON, Ji Young, 34124 Yusung-Gu, Daejeon (KR); JUNG, Jae Heum, 34124 Yusung-Gu, Daejeon (KR)
(74) Representative: Frick, Robert

(57) **Abstract**

The present invention provides a method for producing synthetic fuel from water and carbon dioxide. The method includes the steps of (a) preparing water-derived hydrogen, (b) preparing carbon dioxide, (c) introducing the hydrogen and carbon dioxide into a first reaction to produce a first product comprising synthesis gas, (d) introducing the synthesis gas into a second reaction to produce a second product comprising syncrude, (e) dividing the syncrude oil into a plurality of fractions comprising a first fraction, (f) introducing at least one fraction of the plurality of fractions into a hydrogenation reaction to produce a third product, and (g) recovering a fraction corresponding to a boiling point range of the first fraction from the third product. The present invention also provides an aviation fuel produced by the method.

## Description

### BACKGROUND OF THE INVENTION

### 1. Field of the Invention

The present invention relates to synthetic fuels and methods for producing the same.

### 2. Description of the Related Art

Synthetic fuel (or called synfuel) is generally defined as a hydrocarbon produced through a series of chemical reactions from synthesis gas, which is a mixture of carbon monoxide and hydrogen, and is distinguished from hydrocarbons obtained by distillation of crude oil. The synthesis gas is generally derived through gasification of solid feedstock such as coal or biomass or through natural gas reforming.

Carbon dioxide emitted by mankind activities is believed to be causing climate change and an increase in temperature through an effect known as 'the greenhouse effect'. Accordingly, to prevent increasing the carbon dioxide concentration in the air, a so-called "carbon neutrality" project, which seeks to reduce carbon emissions from human activities and increase absorption of carbon dioxide for reducing actual emissions to zero, has recently been attracting attention.

To realize carbon neutrality various ways to actively utilize renewable energy are being sought. Among these, one approach is to use hydrogen because hydrogen gas can produce high density energy per mass which can be used to fuel gas turbines through carbon-free combustion, and can also produce energy through electrochemical reactions in fuel cells.

Hydrogen is classified into gray hydrogen, blue hydrogen, and green hydrogen, depending on the production method and degree of eco-friendliness. Gray hydrogen refers to hydrogen produced from fossil fuels. Gray hydrogen is produced through a catalytic chemical reaction between methane, which is the main component of natural gas, and high-temperature water vapor, and this catalytic chemical reaction produces carbon dioxide as a by-product. Blue hydrogen is produced in the same manner as gray hydrogen but differs from gray hydrogen in that the produced carbon dioxide is not released into the air but is captured and stored. However, since blue hydrogen production involves production of carbon dioxide, blue hydrogen has also limitations in use. Green hydrogen refers to hydrogen produced through water electrolysis using renewable energy such as geothermal heat, wind power, and hydropower. Green hydrogen is currently attracting attention as the most environmentally friendly hydrogen because there are no carbon dioxide emissions during its production process.

Electro-fuel (e-fuel or E-fuel) refers to hydrocarbon-based fuel obtained from the green hydrogen described above. The e-fuel has essentially the same physical properties as existing petroleum-based fuels and thus can be applied to existing combustors and internal combustion engines as it is, so the e-fuel is considered a fuel that can replace conventional fossil fuels in a carbon-neutral way.

### SUMMARY OF THE INVENTION

The present invention provides synthetic fuel and a method of producing the same.

More specifically, the present invention relates to a method for producing synthetic fuel from water and carbon dioxide, the method comprising: (a) preparing water-derived hydrogen; (b) preparing carbon dioxide; (c) introducing the hydrogen and carbon dioxide into a first reaction to produce a first product including synthesis gas; (d) introducing the synthesis gas into a second reaction to produce a second product comprising syncrude; (e) dividing the syncrude into a plurality of fractions comprising a first fraction; (f) introducing at least a fraction of the plurality of fractions into a hydrogenation reaction to produce a third product; and (g) recovering a fraction having a boiling point within a boiling point range of the first fraction from the third product.

According to one embodiment, the (a) comprises electrolyzing water.

According to one embodiment, the (b) comprises capturing carbon dioxide.

According to one embodiment, the first reaction comprises a reverse water gas shift (RWGS) reaction, an autothermal reforming (ATR) reaction, a steam methane reforming (SMR) reaction, a partial oxidation (POX) gasification reaction, a pre-reforming reaction, or a combination thereof, in which the first product comprises synthesis gas and water.

According to one embodiment, the second reaction is a Fischer-Tropsch (FT) reaction, and the second product comprises syncrude, tail gas, and water.

According to one embodiment, at least a portion of the tail gas is introduced into the first reaction, the second reaction, or both.

According to one embodiment, the first fraction has a boiling point range of kerosene.

According to one embodiment, the method further comprises: (h) recovering a fraction having a lower boiling point than the first fraction among the plurality of fractions; (i) recovering a fraction of the third product, the fraction having a boiling point range of the first fraction, or both.

According to one embodiment, the hydrogenation reaction comprises a hydrocracking (HCK) reaction, a hydrodewaxing (HDW) reaction, or a combination thereof.

According to one embodiment, the (f) comprises introducing the first fraction among the plurality of fractions into an HDW reaction, and/or introducing a fraction with a higher boiling point than the first fraction among the plurality of fractions into a HCK reaction.

According to one embodiment, the (f) comprises introducing a fraction with a higher boiling point than the first fraction among the plurality of fractions into a HCK reaction, and the (f) further comprises introducing a fraction having a boiling point that is within a boiling point range of the first fraction, among HCK reaction products, into the HDW reaction.

According to one embodiment, the (f) further comprises (j) reintroducing a fraction having a boiling point higher than a boiling point range of the first fraction, among the HCK reaction products, into the HCK reaction.

According to one embodiment, wherein prior to the (f), the method further comprises (k) removing impurities present in at least a portion of the plurality of fractions.

The present invention further relates to a synthetic fuel manufactured by the method according to the invention as described above, and to the use of such synthetic fuel as aviation fuel.

According to one embodiment, the synthetic fuel comprises a fraction having a boiling point that is within a boiling point range of the first fraction, the synthetic fuel has an aromatic content of 1 vol% or less.

The inventive method for producing carbon-neutral synthetic fuel generates no carbon dioxide, thereby contributing to alleviating temperature rise attributed to carbon dioxide emissions into the air. In addition, the synthetic fuel produced through the method can replace fuel derived from conventional crude oil or fossil fuels.

### BRIEF DESCRIPTION OF THE DRAWINGS

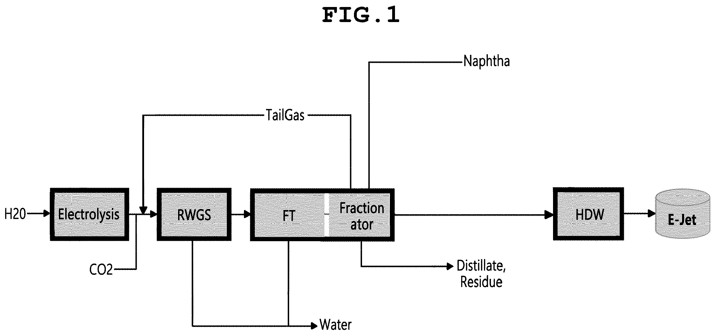

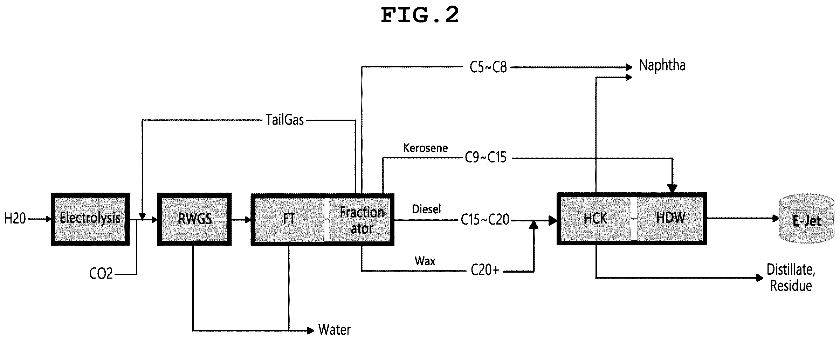

FIGS. 1 and 2 are schematic diagrams illustrating synthetic fuel production methods according to some embodiments of the present invention.

### DESCRIPTION OF THE PREFERRED EMBODIMENTS

The above and other objectives, features, and advantages of the present invention will be more clearly understood from the following detailed description taken in conjunction with the accompanying drawings.

The present invention provides a method for producing synthetic fuel, specifically, a method for producing carbon-neutral synthetic fuel. FIGS. 1 and 2 are schematic diagrams illustrating synthetic fuel production methods according to some embodiments.

The synthetic fuel of the present invention is produced using water as one of the starting materials. First, the method includes a step of preparing hydrogen from water. In terms of environment-friendliness, the hydrogen may be green hydrogen. Accordingly, in one embodiment, the step of preparing hydrogen may include water electrolysis. Specifically, the hydrogen preparation step may involve electrolyzing water using renewable energy.

In the present disclosure, the term "renewable energy"' refers to energy collected from renewable and sustainable resources that can be naturally replenished over time, such as sunlight, wind, rain, tides, waves, and geothermal heat. The renewable energy is not particularly limited as long as it corresponds to the above-mentioned energy and does not cause environmental pollution when using it. The term "renewable energy" may be used interchangeably with "alternative energy".

As a water electrolysis technology used in the hydrogen preparation step, a known water electrolysis technology can be used. Examples of water electrolysis technology include alkaline electroylsis cell (AEC), proton exchange membrane electrolysis cell (PEM), anion exchange membrane electrolysis cell (AEM), and solid oxide electrolysis cell (SOEC). If necessary, a plurality of known water electrolysis technologies may be used in combination.

In addition to hydrogen, carbon dioxide is used as a starting material to produce synthetic fuel of the present invention. Accordingly, the method includes a step of preparing carbon dioxide. However, for the purpose of preparing carbon dioxide, the method of the present invention avoids generating carbon dioxide from a carbon source such as existing fossil fuels. From the perspective of carbon neutrality, carbon dioxide generated as a by-product of human production activities, etc. can be used as a starting material in the present invention. In other words, in one embodiment, the step of preparing carbon dioxide may involve capturing carbon dioxide.

The carbon dioxide capture includes direct air capture (DAC), point source carbon capture, or a combination thereof. The direct air capture is a method of separating and capturing carbon dioxide in the air. The direct air capture has an advantage in that the location is not limited. The point-source carbon capture is a method used in plants that generate carbon dioxide as a by-product, such as thermal power plants. The point-source carbon capture has advantages in that it has excellent carbon dioxide capture efficiency because the concentration of carbon dioxide is high in these plants, and it directly reduces carbon dioxide emissions into the atmosphere at the location where carbon dioxide is generated. The step of capturing carbon dioxide may be performed through known technologies such as technologies using absorbents, adsorbents, and separation membranes.

Meanwhile, hydrogen and/or carbon dioxide prepared as described above may not be used directly at the production site. In one example, the production method of the present invention may be performed in one plant, so that the preparation of hydrogen and carbon dioxide and the subsequent processes described below can all be performed in one place. In other examples, hydrogen and/or carbon dioxide may be prepared at a different location, and only the subsequent processes described below may be performed in one plant. In this case, the hydrogen preparation step and/or the carbon dioxide preparation step may further involve transporting and storing hydrogen or carbon dioxide. The transport and storage steps may be performed using known techniques.

Hydrogen and carbon dioxide prepared as described above are used to produce synthesis gas. The production method of the present invention includes a step of introducing the prepared hydrogen and carbon dioxide into a first reaction. In the first reaction, a first product containing synthesis gas is produced.

The term "synthesis gas" refers to a gaseous mixture of hydrogen and carbon monoxide. To produce synthesis gas, in one embodiment, the first reaction may include a reverse water gas shift (RWGS) reaction, an autothermal reforming (ATR) reaction, a steam methane reforming (SMR) reaction, a partial oxidation (POX) gasification reaction, a pre-reforming reaction, or a combination thereof. The above reactions can be carried out under known reaction conditions. When tail gas described later is returned to the first reaction, the first reaction may include a pre-reforming reaction. In some embodiments, when tail gas(TailGas) described later is returned to the first reaction, the first reaction may include a pre-reforming reaction and a RWGS reaction. The tail gas may be first introduced into the pre-reforming reaction(Not Shown) and then into the RWGS reaction.

For example, the RWGS reaction is performed in the presence of a catalyst at a reaction temperature of at least about 600° C and at a pressure of about 10-40 bar. Specifically, the reaction temperature may be in a range of about 600-1000°C and more specifically in a range of about 800-1000°C, and the pressure may be in a range of about 10-40 bar and, more specifically, in a range of about 20-40 bar. When the reaction temperature and pressure exceed the above ranges, side reactions may increase, catalyst stability may decrease, and yield may decrease.

In one embodiment, the catalyst used in the RWGS reaction may include copper, manganese, lanthanum, calcium, potassium, tungsten, aluminum, or a combination thereof. The catalyst may be supported by a carrier. For example, the carrier may include alumina, magnesia, silica, titania, zirconia, or a combination thereof. When the RWGS reaction is performed as the first reaction, the first product may include water and synthesis gas. The produced water(Water) is separately recovered from the synthesis gas and can be used for other purposes. In one embodiment, the method may further include a step of separating water from the first product, and the separation step may be performed through a known gas-liquid separation means.

The synthesis gas is used to produce syncrude. The method of the present invention includes a step of introducing the synthesis gas into a second reaction. In the second reaction, a second product including synthesis gas is produced. The term "syncrude" refers to a synthetic hydrocarbon having a boiling point range that is equal to or higher than the boiling point of naphtha.

In one embodiment, the second reaction may be a Fischer-Tropsch (FT) reaction. The FT reaction can be performed under known reaction conditions.

For example, the FT reaction may be performed in the presence of a catalyst at a temperature of about 150-400° C, a pressure of 10-50 bar, and an H₂/CO ratio of about 1-4. Specifically, the reaction temperature may be in a range of about 180-400°C and more specifically in a range of about 200-400°C. In addition, specifically, the pressure is in a range of about 10-45 bar and more specifically in a range of about 20-40 bar. In addition, specifically, the H₂/CO ratio is in a range of about 1-3 and more specifically in a range of about 1-2.

In one embodiment, the catalyst used in the FT reaction may include iron, cobalt, nickel, ruthenium, or a combination thereof. The catalyst may be supported on a carrier. For example, the carrier may include alumina, magnesia, silica, titania, zirconia, or a combination thereof.

When the second reaction is an FT reaction, the second product may include tail gas and water as well as syncn.ide. Water produced through the FT reaction is separated from the other products and is separately recovered. Thus, the recovered water can be used for other purposes. In one embodiment, the method may further include a step of separating water from the second product, and the separation step may be performed through a known oil-water separation means.

The second product from which water has been removed may be transferred to a fractionator as shown in FIGS. 1 and 2. The second product from which the water has been removed includes syncrude and tail gas. The tail gas may include hydrocarbons (having 1 to 4 carbon atoms) which are gases at room temperature, unreacted synthesis gas, and carbon dioxide. The second product from which water has been removed is separated in the fractionator according to boiling point. At this time, the tail gas is separated from the syncrude and recovered. In one embodiment, the tail gas may be introduced into the first reaction, the second reaction, or both. The unreacted reactants of the first reaction and the unreacted reactants of the second reaction remaining in the tail gas may be supplied back to the first reaction and/or the second reaction, thereby contributing to improving the yield of the end product.

The syncrude transferred to the fractionator is also separated according to boiling point. That is, the production method of the present invention includes a step of separating the syncrude into a plurality of fractions. The plurality of fractions includes a first fraction.

The plurality of fractions may be divided into an appropriate number of fractions as needed. For example, as shown in FIG. 2, the plurality of fractions may include naphtha fraction (C5-C8), kerosene fraction (C9-15), diesel fraction (C15-20), and wax fraction (C20+).

In one embodiment, the first fraction may have a boiling point that is in a boiling point range of kerosene. For example, the first fraction may have a boiling point that is in a range of 130°C to 300°C. Specifically, the first fraction may be the kerosene fraction. The first fraction may vary depending on the type of synthetic fuel to be produced as the end product. When the first fraction is the kerosene fraction, aviation fuel can be produced as a synthetic fuel, as described later.

Among the plurality of fractions, a fraction lighter than the synthetic fuel to be produced as the end product may be recovered separately. That is, in one embodiment, the method may further include a step of recovering a fraction having a lower boiling point than the first fraction among the plurality of fractions. For example, as described above, when the first fraction is the kerosene fraction, a naphtha fraction that is lighter than the kerosene fraction may be recovered separately. The recovered naphtha fraction can be used as a raw material for manufacturing known petrochemical products through subsequent processes.

The present invention includes a step of introducing at least a portion of the plurality of fractions described above into a hydrogenation reaction to produce a third product. As shown in FIGS. 1 and 2, for example, the first fraction and/or a heavier fraction of the plurality of fractions may be introduced into the hydrogenation reaction. The third product is produced by the hydrogenation reaction.

In the present invention, the hydrogenation reaction is an HCK reaction, an HDW reaction, or a combination thereof. The HCK reaction converts a heavier fraction into a lighter fraction. The HDW reaction refers to a reaction that removes wax components by isomerizing wax components such as n-paraffin into iso-paraffin. By improving the pour point of the oil fraction through the HDW reaction, the low-temperature performance of the product can be controlled.

Referring to FIG. 1, in one embodiment, the hydrogenation reaction may include an HDW reaction. For example, some of the plurality of fractions including the first fraction may be introduced into the HDW reaction to produce the third product.

Referring to FIG. 2, in another embodiment, the hydrogenation reaction may include an HCK reaction and an HDW reaction. As illustrated in FIG. 2, for example, some of the plurality of fractions may be introduced only into the HDW reaction, while others may be introduced into both the HCK and HDW reactions.

The HCK and HDW reactions may be performed under known reaction conditions.

For example, the HCK reaction may be performed in the presence of a catalyst at a reaction temperature of about 200°C to 500°C, a reaction pressure of about 20 to 200 kg/cm², an LHSV of 0.1 to 5.0 hr⁻¹, and an H₂/oil ratio of 300 to 2000 Nm³/m³. Specifically, the reaction temperature may be in a range of about 200°C to 450°C and more specifically in a range of about 300°C to 410°C. In addition, specifically, the reaction pressure may be in a range of about 20 to 150 kg/cm² and more specifically in a range of about 40 to 120 kg/cm². In addition, specifically, the LHSV may be in a range of about 0.3 to 4.0 hr⁻¹ and more specifically in a range of about 0.5 to 3.0 hr⁻¹. In addition, specifically, the H₂/oil ratio may be in a range of about 400 to 1800 Nm³/m³ and more specifically in a range of about 400 to 1500 Nm³/m³.

For example, the catalyst used in the HCK reaction may include Ni, Pt, Pd, Ru, Ni-Ru, Ni-Mo, or a combination thereof and may be supported on a carrier. For example, the carrier may include zeolite, alumina, silica, titania, zirconia, or a combination thereof.

For example, the HDW reaction may be performed at a reaction temperature of about 200°C to 500°C, a reaction pressure of about 20 to 300 kg/cm², an LHSV of 0. 1 to 5.0 hr⁻¹, and an H₂/oil ratio of 100 to 3000 Nm³/m³. Specifically, the reaction temperature may be in a range of about 200°C to 450°C and more specifically in a range of about 250°C to 410°C. In addition, specifically, the reaction pressure may be in a range of about 20 to 250 kg/cm² and more specifically in a range of about 30 to 200 kg/cm². In addition, specifically, the LHSV may be in a range of about 0.1 to 4.0 hr⁻¹ and more specifically in a range of about 0.1 to 3.0 hr⁻¹. In addition, specifically, the H₂/oil ratio may be in a range of about 150 to 2500 Nm³/m³ and more specifically in a range of about 150 to 2000 Nm³/m³.

In addition, a suitable catalyst for the HDW process may include: a carrier having an acid site, such as a molecular sieve, alumina, and silica-alumina, and a metal having one or more hydrogenation elements selected from elements of Groups 2, 6, 9, and 10 of the periodic table. The metal in Groups 9 and 10 (i.e., Group VIII) may be Co, Ni, Pt, or Pd, and the metal in Group 6 (i.e., group VIB) may be Mo or W. Examples of types of carriers having an acid site include molecular sieve, alumina, silica-alumina, etc. Among these, the molecular sieve refers to crystalline aluminosilicate (zeolite), SAPO, ALPO, etc. As the molecular sieve, a medium pore molecular sieve with a 10-membered oxygen ring such as SAPO-11, SAPO-41, ZSM-11, ZSM-22, ZSM-23, ZSM-35, ZSM-48, etc., may be used, or a large pore molecular sieve with a 12-membered oxygen ring may be used.

In one embodiment, hydrogen used in the hydrogenation reaction step may be green hydrogen, and therefore, the hydrogen may be prepared in the same manner as in the hydrogen preparation step described above and supplied to the hydrogenation reaction step.

In the present invention, the plurality of fractions may be independently introduced into the hydrogenation reaction. In the method, at least some of the plurality of fractions can be introduced into the HDW reaction, and at least some of the remaining fractions of the plurality of fractions can be introduced into the HCK reaction. The HCK reaction product may be additionally introduced into the HDW reaction. Accordingly, in one embodiment, the hydrogenation reaction step may include at least one of the steps of introducing the first fraction among the plurality of fractions into the HDW reaction, and a fraction having a boiling point higher than that of the first fraction among the plurality of fractions into the HCK reaction.

In addition, when the hydrogenation reaction step includes the step of introducing a fraction with a higher boiling point than the first fraction among the plurality of fractions into the HCK reaction, the method may comprise a step of introducing at least a portion of the HCK reaction products into the HDW reaction. Here, at least some of the HCK reaction products may include fractions having boiling points within the boiling point range of the first fraction.

In addition, among the HCK reaction products, an oil heavier than the oil introduced into the HDW reaction may be reintroduced into the HCK reaction. For example, when a fraction having a boiling point range of the first fraction, among the HCK reaction products, is introduced into the HDW reaction, a fraction having a boiling point higher than the boiling point range of the first fraction of the HCK reaction products may be reintroduced into the HCK reaction. Through the HCK reaction and reintroduction processes, it is possible to increase the yield of the end product and minimize the generation of unnecessary by-products.

As described above, a third product is produced through the hydrogenation reaction step. The third product may be divided into a fraction having the same boiling point range as the first fraction, a fraction having a boiling point lower than the boiling point range of the first fraction, and a fraction having a boiling point higher than the boiling point range of the first fraction. Fractions having a boiling point higher than the boiling range of the first fraction may be reintroduced into the hydrogenation reaction step, as described above.

The method may further include a step of removing impurities present in the syncrude prior to the hydrogenation reaction step. Here, the impurities refer to solids present in the syncrude. The physical means may include, for example, a filter, a membrane, etc. The removal step may be performed on syncrude, or may be performed on all or some of the plurality of fractions. When the impurity removal step is performed on some of the plurality of fractions, fractions with a high impurity content may undergo the removal step, but fractions with a low impurity content may not undergo the removal step.

Meanwhile, in one embodiment, the method further includes a step of recovering a fraction having a boiling point lower than the boiling point range of the first fraction, from the third product. As described above, when the first fraction is a kerosene fraction, the fraction with a boiling point lower than the boiling point range of the first fraction, among the third products, is a naphtha fraction, and the naphtha fraction can be recovered separately. The recovered naphtha fraction can be used as a raw material for manufacturing known petrochemical products through subsequent processes. In addition, the recovery step may be performed in combination with the step of recovering a fraction having a lower boiling point than the first fraction among the plurality of fractions derived from the above-mentioned second reaction product, and thus those recovered fraction can be used as a raw material for manufacturing other products.

The production method of the present invention includes a step of recovering a fraction having a boiling point within the boiling point range of the first fraction from the third product. A fraction having the properties of the target synthetic fuel is recovered from the third product. In one embodiment, the recovery step may further include a step of introducing a fraction having a boiling point within the boiling point range of the first fraction into a hydrofinishing reaction.

In the hydrofinishing reaction, hydrogen is added to the fraction to saturate the aromatics and olefins in the first fraction with hydrogen, thereby improving the stability of the fuel product against various aspects such as oxidation, heat, and UV. The hydrofinishing reaction can be performed under known reaction conditions.

For example, the hydrofinishing reaction may be performed in the presence of a catalyst. The catalyst used in the hydrofinishing reaction includes one or more metals selected from Group 6, 8, 9, 10, and 11 elements having a hydrogenation function. Specifically, metal sulfides of Ni-Mo, Co-Mo, and Ni-W may be used. Pt and Pd can be used.

Additionally, substances with a large surface area such as silica, alumina, silica-alumina, titania, zirconia, and zeolite can be used as the carrier, and specifically, alumina and silica-alumina can be used.

The synthetic fuel of the present invention is produced through the above-described production method. In one embodiment, the synthetic fuel may be aviation fuel. Additionally, from the perspective of being an environmentally friendly, carbon-neutral fuel, the aviation fuel may also be referred to as sustainable aviation fuel (SAF).

As described above, the synthetic fuel of the present invention may comprise a fraction having a boiling point within a boiling point range of the first fraction. Specifically, the synthetic fuel may consist of the fraction having a boiling point within the boiling point range of the first fraction. In one embodiment, the aromatic content of the synthetic fuel may be 1 vol% or less. This low aromatic content has the following advantages:
- inhibiting environmental pollution: aromatic compounds are air pollutants, and the use of synthetic fuels with low aromatic content can contribute to suppressing environmental pollution by reducing the emissions of air pollutants generated during the fuel combustion process.
- improving combustion efficiency: some aromatic compounds can reduce combustion efficiency, and the low aromatic content can reduce fuel consumption, thereby contributing to improved fuel efficiency.
- reducing deposits and improving fuel system performance: aromatic compounds can form deposits in a fuel system, and these deposits can have adverse effects on the fuel system. Accordingly, a low content of aromatic compounds enables a fuel system to normally operate and contribute to improving engine reliability and lifespan.
- improving lubrication properties: a low aromatic content can lower the viscosity of synthetic fuel, improve lubricity, and improve thermal efficiency in the engine.

Synthetic fuel produced through the production method of the present invention can replace conventional fossil fuel-based synthetic fuel, and can significantly reduce the amount of carbon dioxide generated during the production process, thereby reducing carbon dioxide emissions into the atmosphere.

## Claims

1. A method of producing synthetic fuel from water and carbon dioxide, the method comprising:
(a) preparing water-derived hydrogen;
(b) preparing carbon dioxide;
(c) introducing the hydrogen and carbon dioxide into a first reaction to produce a first product comprising synthesis gas;
(d) introducing the synthesis gas into a second reaction to produce a second product comprising syncrude;
(e) dividing the syncrude into a plurality of fractions comprising a first fraction;
(f) introducing at least a portion of the plurality of fractions into a hydrogenation reaction to produce a third product; and
(g) recovering a fraction having a boiling point that falls within a boiling point range of the first fraction from the third product.

2. The method of claim 1, wherein the (a) comprises electrolyzing water.

3. The method of any preceding claim, wherein the (b) comprises capturing carbon dioxide.

4. The method of any preceding claim, wherein the first reaction comprises a reverse water gas shift (RWGS) reaction, an autothermal reforming (ATR) reaction, a steam methane reforming (SMR) reaction, a partial oxidation (POX) gasification reaction, a pre-reforming reaction, or a combination thereof, and
the first product comprises synthesis gas and water.

5. The method of any preceding claim, wherein the second reaction is a Fischer-Tropsch (FT) reaction and the second product comprises syncrude, tail gas, and water.

6. The method of any preceding claim, wherein the first fraction has a boiling point range of kerosene.

7. The method of any preceding claim, wherein the method further comprises:
(h) recovering a fraction having a lower boiling point than the first fraction among the plurality of fractions;
(i) recovering a fraction having a boiling point lower than a boiling point range of the first fraction, from the third product; or
a combination thereof.

8. The method of any preceding claim, wherein the hydrogenation reaction comprises a hydrocracking (HCK) reaction, a hydrodewaxing (HDW) reaction, or both.

9. The method of claim 8, wherein the (f) comprises:
(f) introducing the first fraction of the plurality of fractions into the HDW reaction; and
(f) introducing a fraction having a boiling point higher than that of the first fraction, among the plurality of fractions, into the HCK reaction.

10. The method of claim 9, wherein the (f) comprises introducing a fraction having a boiling point higher than that of the first fraction, among the plurality of fractions, into the HCK reaction, and
the (f) further comprises introducing a fraction having a boiling point that is within a boiling point range of the first fraction, among HCK reaction products, into the HDW reaction.

11. The method of claim 10, wherein the (f) further comprises (j) reintroducing a fraction having a boiling point higher than a boiling point range of the first fraction, among the HCK reaction products, into the HCK reaction.

12. The method of any preceding claim, wherein prior to the (f), the method further comprises (k) removing impurities present in at least a portion of the plurality of fractions.

13. A synthetic fuel produced by the method of any preceding claim.

14. The synthetic fuel of claim 13, wherein the synthetic fuel comprises a fraction having a boiling point that is within a boiling point range of the first fraction,
the synthetic fuel has an aromatic content of 1 vol% or less.

15. Use of a synthetic fuel of claim 13 or 14 as aviation fuel.
